# EUROPEAN PATENT APPLICATION

(11) **EP 0 561 495 A1**
(43) Date of publication of application: **22.09.1993**
(21) Application number: 93300851.8
(22) Date of filing: 05.02.1993
(51) Int. Cl.: B29C 65/00, B29C 65/56, A63B 49/10

(54) **Games racket**

(30) Priority: 13.03.1992 GB 9205569
(71) Applicant: DUNLOP LIMITED, London SW1P 2PL (GB)
(72) Inventor: Haines, Robert Christopher, Fenay Bridge, Huddersfield HD8 0JW (GB); Marsden, Andrew John, Newmillerdam, Wakefield WF2 7SW (GB)
(74) Representative: Fenwick, Elizabeth Anne

(57) **Abstract**

A hollow games racket frame (7) comprises a head and a handle and at least one joint (A₂-B₂,A₃-B₃) between the head and the handle, said joint comprising substantially concentrically tubular members with an elastomeric interlayer mechanically isolating one tubular member from the other and wherein the or each overlap joint comprises a mechanical interlock. This novel racket construction can be made by adapting known moulding techniques such as compression moulding.

## Description

This invention relates to a method of making a hollow games racket frame for example for tennis badminton or squash and to the products thereof.

According to one aspect of the present invention a method of moulding a hollow games racket frame from fibrous material impregnated or otherwise closely associated with a thermosetting or thermoplastic resin includes providing at least one overlap joint in the frame wherein the joint is formed during the moulding operation and consists of substantially concentrically overlapping tubular members and interposed therebetween and mechanically isolating one tubular member from the other is an elastomeric interlayer.

According to a further aspect of the present invention a hollow games racket frame comprises a head and a handle and at least one joint between the head and the handle, said joint comprising substantially concentrically tubular members with an elastomeric interlayer mechanically isolating one tubular member from the other and wherein the or each overlap joint comprises a mechanical interlock.

The jointing members may be interlocked together in the final product without there being bonding between the components e.g. by virtue of the geometry of the jointed assembly, a so-called "mechanical interlock". A particular example of this embodiment is where the shape of the mould in the area of the overlapping members is such that the final moulded shape of the members cause them to become interlocked together, although, of course, they may not necessarily be bonded together because of the presence of the elastomeric interlayer. A second embodiment of the invention is where the overlapping joints are formed in each of the two shaft components joining the handle to the head of a conventional tennis racket. In this case, because the overlapping jointed areas are angled with respect to each other, the head of the racket cannot be separated from the shaft even though the members of each joint may not be bonded together.

As will be appreciated by a skilled artisan, the elastomeric sleeve must be of material which will not deteriorate under the action of the heat and pressure of the moulding operation, i.e. must remain substantially in place and still be elastomeric. Examples of suitable elastomeric products include silicon rubber, butyl rubber, neoprene rubber and ethylene propylene rubber. Alternative materials are thermoplastic rubbers such as ethylene vinyl acetate, polyether ester elastomer and polyether block amides which must have melting points higher than the temperature at which the moulding operation takes place.

Potential advantages of the present invention include the provision of a method of constructing a games racket frame with particular properties given to it by means of the elastomeric sleeve disposed within the or each overlap joint, and isolating each member of the joint. The elastomeric material selected for the sleeve depends upon the overall aim of the presence of the overlap joint, but may be used to alter the stiffness, the vibration frequency or the vibration damping properties of the resulting racket.

By way of example only, aspects of the present invention are illustrated in the accompanying Figures 2 to 6, Figure 1 relating to the known method in which:
- Figure 1: is a part schematic view of a wrapped assembly of materials around a mandrel;
- Figure 2: is a section through a wrapped assembly at the position of an overlap joint;
- Figure 3: is a schematic view of a wrapped assembly with one overlap joint, prior to moulding in a "hook" shape;
- Figure 4: is a section through part of a mould designed to form a mechanical interlock between the members which are also shown in section together with the elastomeric sleeve; and
- Figure 6: is a schematic view of a moulded games racket frame with overlap joints in the throat region and/or an overlap joint in the shaft between the throat region and the part of the handle which would be gripped during play.

The racket frame is made to a procedure well known to those skilled in the art. It consists of making a hollow racket frame from carbon fibre and/or glass fibre 'pre-preg', i.e. a woven fabric or an aligned fibre assemblage pre-impregnated with a thermosetting resin, usually an epoxy resin.

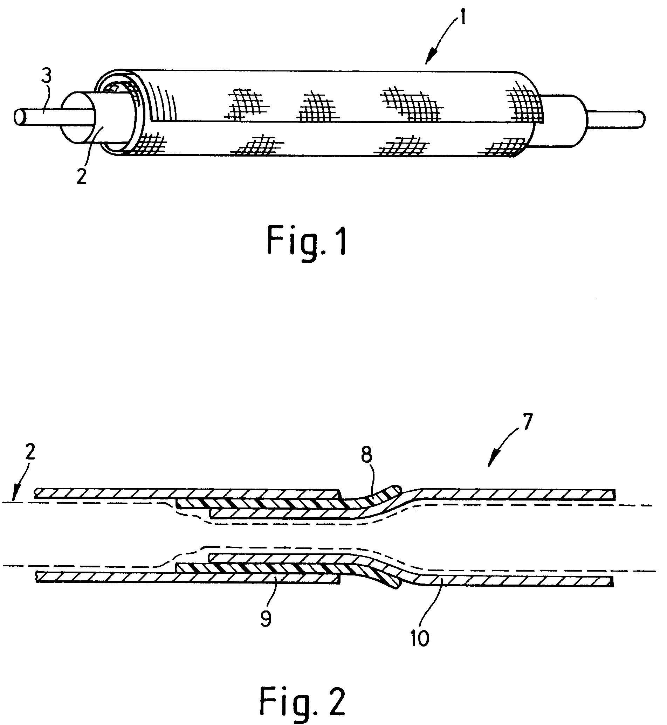

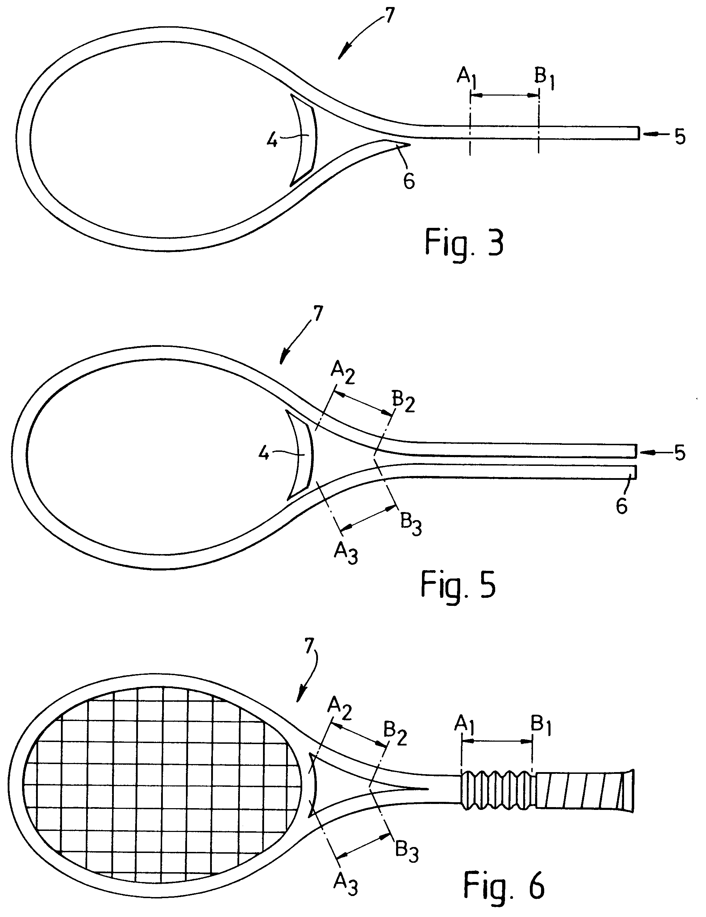

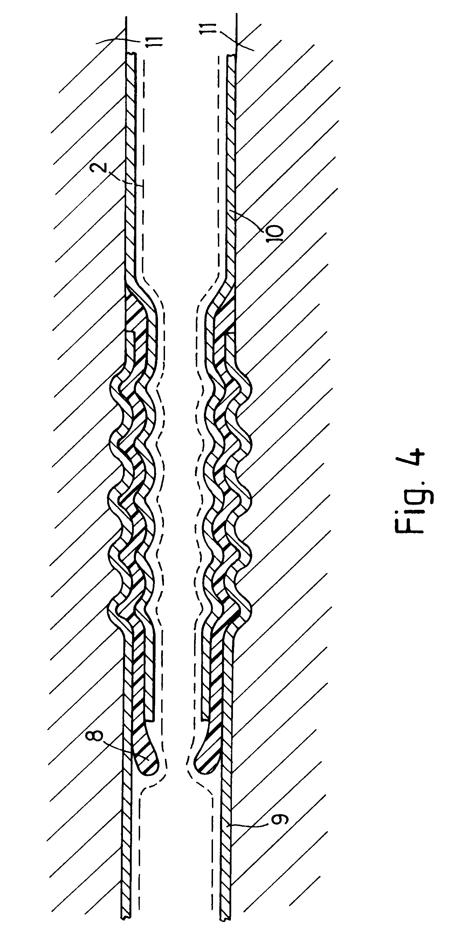

Referring to Figure 1, the fabric or fibre assemblage 1 is wrapped spirally around a polyamide tube 2 placed over a mandrel 3 to form a hollow tubular assembly which in the drawing has been shortened for clarity. The mandrel is then removed and the tubular assembly is formed into a hook (see Figure 3) or keyhole (see Figure 5) shape with one end sealed 6 and is then inserted into a mould cavity of the desired form.

A 'bridge piece' 4 is inserted into the mould to complete the oval of the head and this is normally made from pre-preg wrapped round a rigid polyurethane foam former. The mould is then closed and heated, and the polyamide tube pressurised from an external source in the direction 5 and the resin cured. A rigid and strong frame is produced in this way.

The procedure for making a frame according to the present invention is identical to the above described method, except that the spirally wrapped assembly 7 is made in separate parts such that at least one overlapping joint is produced between the separate parts 9, 10 and an elastomeric interlayer 8 in the form of a sleeve separates the component parts which prevents them from becoming bonded together (Fig. 2). The elastomeric sleeve 8 is composed of a material which resists the moulding temperature applied. This joint A₁ B₁ may be situated in the shaft of a racket as shown in Figs 3 and 6.

In this case the mould 11 is specially contoured in the position of the overlapping joint so that the separate components of the joint are moulded to a profile which interlocks together while still being separated by the elastomeric sleeve 8 (Fig. 4).

In an alternative example, two independent joints A₂ B₂ and A₃ B₃ are formed in the twin shafts of a racket as in Figs. 5 and 6. In this case the area of the joint need not be specifically profiled, due to the fact that the components are integrally moulded on either side of the joints so that the two parts of the racket cannot be separated because of geometrical considerations related to the angle of each shaft with respect to each other.

It should be noted that whereas the example above referred to a woven fabric or aligned fibre assemblage pre-impregnated with a thermosetting resin, alternative fibre reinforced structures can be made from glass or carbon fibre yarns or filaments combined with thermoplastic yarns, or by a process known as 'co-mingling' or 'intermingling' such that woven fibres or tubular braids may be produced from the composite yarns. These may then be formed into a tubular moulding assembly as referred to above by wrapping, as in the case of the woven fabric, or by concentrically assembling two or more layers of braid. The racket is moulded as before, but in this case the mould is first heated to melt the thermoplastic yarns or filaments and then cooled so that carbon or glass fibres become combined together by a thermoplastic matrix resulting from the melting of the thermoplastic yarns or filaments. This process is well known to those skilled in the art and is referred to here to indicate that the overlapping joint of the invention can be applied to moulded structures based on a thermoplastic resin matrix, as well as to those based on a thermosetting resin matrix. This is so because the overlapping joint does not rely on any adhesive bonding which might or might not occur with a thermosetting resin, but would be unlikely to occur with a thermoplastic resin.

## Claims

1. A method of moulding a hollow games racket frame from fibrous material impregnated or otherwise closely associated with a thermosetting or thermoplastic resin characterised in that it includes providing at least one overlap joint in the frame wherein the joint is formed during the moulding operation and consists of substantially concentrically overlapping tubular members (9,10) and interposed therebetween and mechanically isolating one member from the other is an elastomeric interlayer (8).

2. A method according to Claim 1 characterised in that the or each overlap joint comprises a mechanical interlock.

3. A method according to Claim 1 or 2 characterised in that the or each overlap joint is in the region of the frame between the head and the handle.

4. A method according to Claim 1, 2 or 3 characterised in that two overlap joints are included in the frame one in each of twin shafts defining the throat region of the frame.

5. A method according to any previous claim characterised in that a compression moulding technique is used.

6. A hollow games racket frame characterised in that it is made by the method according to any previous claim.

7. A hollow games racket frame characterised in that it comprises a head and a handle and at least one joint between the head and the handle, said joint comprising substantially concentrically tubular members with an elastomeric interlayer mechanically isolating one tubular member from the other and wherein the or each overlap joint comprises a mechanical interlock.
